# EUROPEAN PATENT APPLICATION

(11) **EP 2 716 388 A1**
(43) Date of publication of application: **09.04.2014**
(21) Application number: 12793443.8
(22) Date of filing: 11.04.2012
(51) Int. Cl.: B22F 3/18, B22F 7/04, B23K 35/40

(54) **POWDER ROLLING MILL**

(30) Priority: 03.06.2011 JP 2011125054
(71) Applicant: IHI Corporation, Tokyo 135-8710 (JP)
(72) Inventor: MOCHIZUKI Chitoshi, Tokyo 135-8710 (JP); ODA Tamotsu, Tokyo 135-8710 (JP)
(74) Representative: Lamb, Martin John Carstairs
(86) International application number: PCT/JP2012/059916
(87) International publication number: WO 2012/165057

(57) **Abstract**

The powder-rolling device relating to the present invention includes a preliminary press roll, and a pushing unit (12) to push rolling rolls (2) so as to be separated from each other in a state where the rolling rolls (2) do not attach powder material (Y) to a base material (X) (a state before the powder rolling is performed). According to the powder-rolling device having the above configuration, it is possible to more accurately control the supply amount of the powder material to be supplied to the space between the rolling rolls.

## Description

### Technical Field

The present invention relates to a powder-rolling device.

Priority is claimed on Japanese Patent Application No. 2011-125054, filed on June 3, 2011, the contents of which are incorporated herein by reference.

### Background Art

In recent years, as a device used in the process of producing a clad sheet in which a clad layer is formed so as to be attached to the surface of a base material, a powder-rolling device used to attach powder to the base material through pressure is proposed.

For example, Patent Document 1 discloses a powder-rolling device such as described above.

In more detail, the powder-rolling device includes a pair of rolling rolls disposed to be opposite to each other. The powder-rolling device applies a rolling load to the rolling rolls, and thereby the rolling rolls attach powder to the surface of the base material through pressure, wherein the base material is supplied to the space between the rolling rolls. As a result, a powder layer is formed on the surface of the base material.

In addition, for example, as shown in Patent Document 2, the above-described rolling rolls are supported by bearings and roll chocks.

### Document of Related Art

### Patent Document

[Patent Document 1] Japanese Patent No. 4211576
[Patent Document 2] Japanese Unexamined Patent Application, First Publication No. 2009-270169

### Summary of Invention

### Technical Problem

In the powder-rolling device, in order to stably supply powder material to the space between the rolling rolls, a preliminary press roll may be used to press the powder material on a circumferential surface of the rolling rolls before the powder material is attached to the base material through pressure.

The distance between the circumferential surface of the rolling roll and the circumferential surface of the preliminary press roll regulates the supply amount of the powder material to the space between the rolling rolls. Therefore, the distance between the circumferential surface of the rolling roll and the circumferential surface of the preliminary press roll is set to be equal to a distance suitable for the supply amount of the powder material, before the clad sheet is produced.

However, the bearings or the roll chocks supporting the rolling rolls have mechanical errors, or have slight gaps in order to allow the operation thereof. When the rolling rolls are rolling the powder material in a state where the base material and the powder material are positioned between the rolling rolls and the rolling load is applied to the rolling rolls, the counter force during rolling acts on the rolling rolls. Therefore, since the rolling rolls are moved to be separated from each other by the counter force, the above gaps are crushed by the movement of the rolling rolls.

That is, the position at which the rolling roll is supported inside the roll chock during rolling is slightly different from that during non-rolling. As a result, the relative position between the rolling roll and the preliminary press roll is changed in the time between rolling and non-rolling.

Consequently, in a conventional powder-rolling device, even if the distance between the circumferential surface of the rolling roll and the circumferential surface of the preliminary press roll is adjusted before rolling, the distance between the circumferential surface of the rolling roll and the circumferential surface of the preliminary press roll is slightly changed during rolling. In addition, by this slight change, the supply amount of the powder material supplied between the rolling rolls may exceed the acceptable amount.

The present invention aims to more accurately control the supply amount of powder material to be supplied to the space between rolling rolls, in a powder-rolling device including a preliminary press roll.

### Solution to Problem

The present invention adopts, as a means to solve the above problems, the configuration in which a powder-rolling device includes: a pair of rolling rolls used to roll a sheet-shaped base material while attaching powder material to the base material through pressure; a preliminary press roll to form a preliminarily-pressed powder layer by pressing the powder material on a circumferential surface of the rolling rolls, before the powder material which has been supplied onto the circumferential surface of the rolling rolls is attached to the base material through pressure; and a pushing unit to push the rolling rolls so as to be separated from each other, in a state where the rolling rolls do not attach the powder material to the base material through pressure.

According to the present invention, in a state where the rolling rolls do not attach the powder material to the base material using pressure (a state before the powder rolling is performed), the pushing unit pushes the rolling rolls so as to be separated from each other. Therefore, the position of the rolling roll before the powder rolling is performed can be adjusted to be approximately equal to the axial position of the rolling roll inside a roll chock while the powder rolling is performed.

Consequently, the distance between the circumferential surface of the rolling roll and the circumferential surface of the preliminary press roll can be regulated in a state of simulating the position of the rolling roll before the powder rolling is performed, and the above distance can be regulated more accurately. Since the supply amount of the powder material is set based on the distance between the circumferential surface of the rolling roll and the circumferential surface of the preliminary press roll, as a result of accurately regulating the distance between the circumferential surface of the rolling roll and the circumferential surface of the preliminary press roll, the supply amount of the powder material to be supplied between the rolling rolls can be controlled more accurately.

### Effects of Invention

According to the present invention, in a powder-rolling device including a preliminary press roll, the supply amount of powder material to be supplied between rolling rolls can be controlled more accurately.

### Brief Description of Drawings

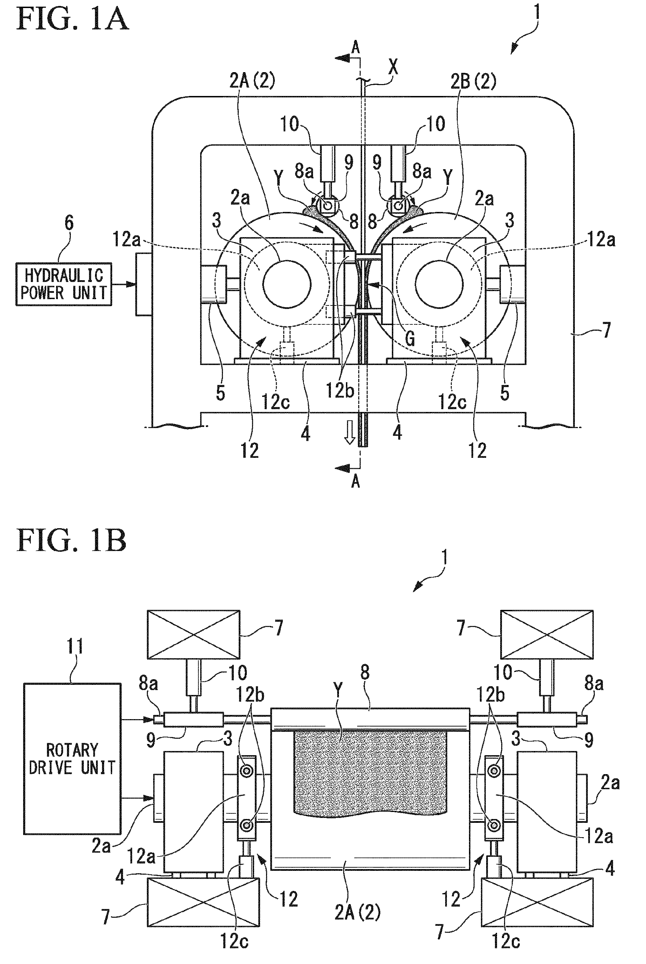

FIG. 1A is a schematic configuration diagram showing a main section of a powder-rolling device in an embodiment of the present invention, viewed in the rotation axis direction of a rolling roll.
FIG. 1B is a schematic configuration diagram showing the main section of the powder-rolling device in the embodiment of the present invention, and is a cross-sectional view along the arrow line A-A in FIG. 1A, viewed in the arrow direction thereof.

### Description of Embodiments

An embodiment of a powder-rolling device relating to the present invention is described below with reference to the drawings. In the following drawings, the scale of each member is appropriately changed so that each member has a recognizable size.

A powder-rolling device 1 of this embodiment is used in the process of producing a clad sheet formed by attaching a clad layer to both surfaces of a sheet-shaped base material X composed of metal, wherein the clad layer, for example, functions as a brazing filler metal layer. The powder-rolling device 1 attaches powder material Y to both surfaces of the base material through pressure, wherein the powder material Y becomes the formation material of the clad layer.

As shown in FIGS. 1A and 1B, the powder-rolling device 1 of this embodiment includes rolling rolls 2, rolling roll chocks 3, linear guides 4, rolling roll hydraulic cylinders 5, a hydraulic power unit 6, a housing frame 7 (support frame), preliminary press rolls 8, preliminary press roll chocks 9, preliminary press roll lifting mechanisms 10, a rotary drive unit 11, and pushing mechanisms 12.

In addition, not shown in FIGS. 1A and 1B, the powder-rolling device 1 of this embodiment includes a let-off device used to let off the base material X while supporting a coil in which the base material X is wound, a transfer device which transfers the base material X, a powder material supply device which supplies the powder material Y onto the circumferential surfaces of the rolling rolls 2, a controller which controls the entire powder-rolling device 1, and the like.

The rolling rolls 2 roll and attach the powder material Y to the base material using pressure.

In the powder-rolling device 1 of this embodiment, as shown in FIG. 1A, two rolling rolls 2A, 2B are configured to be a pair. The two rolling rolls 2A, 2B are disposed to be opposite to each other so that the circumferential surfaces thereof face each other. In addition, as shown in FIG. 1A, the two rolling rolls 2A, 2B are disposed so that their rotation axes are parallel to each other and their levels are the same.

In the powder-rolling device 1 of this embodiment, the base material X passes between the two rolling rolls 2A, 2B downward from above, and the powder material Y is attached to the surfaces of the base material X through pressure, at the gap G between the two rolling rolls 2A, 2B.

The rolling roll chock 3 is provided in the shaft 2a on each end of the rolling roll 2, and supports the rolling roll 2 by rotatably supporting the shaft 2a.

Each of the rolling roll chocks 3 supports bearings attached directly to the shaft 2a.

The linear guides 4 support the rolling roll chocks 3 movably in the arrangement direction of the rolling rolls 2A, 2B.

Specifically, the linear guides 4 are disposed under the rolling roll chocks 3, and support the roll chocks movably in the arrangement direction of the rolling rolls 2A, 2B.

The rolling roll hydraulic cylinders 5 support the rolling roll chocks 3 from the outsides thereof in the arrangement direction of the rolling rolls 2A, 2B, and apply loads to the rolling rolls 2A, 2B so that they approach each other.

The hydraulic power unit 6 operates the rolling roll hydraulic cylinders 5 provided near the rolling roll 2A, and thereby regulates the loads applied to the rolling rolls 2A, 2B.

The housing frame 7 is a support structure which supports the rolling rolls 2, the rolling roll chocks 3, the linear guides 4, the rolling roll hydraulic cylinders 5, the hydraulic power unit 6, the preliminary press rolls 8, the preliminary press roll chocks 9, and the preliminary press roll lifting mechanisms 10.

As shown in FIGS. 1A and 1B, the housing frame 7 supports the rolling roll chocks 3 though the linear guides 4. That is, the housing frame 7 in this embodiment slidably supports the rolling roll chocks 3 though the linear guides 4.

In addition, the rolling roll hydraulic cylinders 5 are provided in the housing frame 7, and are disposed between the housing frame 7 and the rolling roll chocks 3.

The preliminary press rolls 8 are disposed above the rolling rolls 2. The preliminary press rolls 8 press the powder material Y which has been supplied from the powder material supply device, against the circumferential surfaces of the rolling rolls 2, thereby preliminarily applying pressure to the powder material Y, before the powder material Y reaches the gap G. By the preliminary pressure application to the powder material Y by the preliminary press rolls 8, the powder material Y becomes powder layers having uniform thickness, at the circumferential surfaces of the rolling rolls 2, and the powder layers are prevented from slipping off the circumferential surfaces of the rolling rolls 2.

In addition, the preliminary press rolls 8 control the supply amount of the powder material Y to be sent to the gap G, using the rotation speed thereof.

The preliminary press roll chock 9 is provided in the shaft 8a on each end of the preliminary press roll 8, and supports the preliminary press roll 8 by rotatably supporting the shaft 8a.

Each of the preliminary press roll chocks 9 includes bearings attached directly to the shaft 8a.

Each of the preliminary press roll lifting mechanisms 10 supports the preliminary press roll chock 9 from above, and maintains a constant distance between the circumferential surface of the preliminary press roll 8 and the circumferential surface of the rolling roll 2. The preliminary press roll lifting mechanisms 10 are fixed to the housing frame 7.

The preliminary press roll lifting mechanisms 10 are fixed to the housing frame 7 in the drawings, but may be fixed to the rolling roll chocks 3.

In addition, the preliminary press roll lifting mechanism 10 is capable of adjusting the position of the preliminary press roll 8 in the up-and-down direction in a state where the powder material Y is not supplied thereto. That is, the preliminary press roll lifting mechanism 10 can regulate the distance between the circumferential surface of the rolling roll 2 and the circumferential surface of the preliminary press roll 8.

The rotary drive unit 11 rotationally drives the rolling rolls 2 and the preliminary press rolls 8, and is connected to each rolling roll 2 and each preliminary press roll 8.

The pushing mechanisms 12 push the rolling rolls 2 so as to be separated from each other, in a state where the powder material is not supplied between the rolling rolls 2.

The pushing mechanism 12 includes auxiliary roll chocks 12a, separating hydraulic cylinders 12b (first pushing device), and lifting hydraulic cylinders 12c (second pushing device).

The auxiliary roll chock 12a is provided on the shaft 2a of the rolling roll 2, as a device different from the rolling roll chock 3 supporting the weight of the rolling roll 2, and includes bearings attached directly to the shaft 2a of the rolling roll 2.

As shown in FIGS. 1A and 1B, the auxiliary roll chocks 12a are provided in each of the rolling rolls 2A and 2B, and two auxiliary roll chocks are provided in one rolling roll 2.

The separating hydraulic cylinders 12b push the rolling rolls 2 so that the rolling rolls 2 are separated from each other.

The separating hydraulic cylinders 12b are disposed between the auxiliary roll chock 12a provided in one rolling roll 2A and the auxiliary roll chock 12a provided in the other rolling roll 2B, and push the rolling rolls 2 through the auxiliary roll chocks 12a.

In addition, the separating hydraulic cylinders 12b are fixed to one of the two auxiliary roll chocks 12a facing each other (in this embodiment, to the auxiliary roll chock 12a provided in the rolling roll 2A), and press the other auxiliary roll chock 12a (in this embodiment, the auxiliary roll chock 12a provided in the rolling roll 2B).

As a result, the rolling rolls 2A and 2B are pushed to be separated from each other, by the pushing force of the separating hydraulic cylinders 12b and by the counter force thereof.

The lifting hydraulic cylinders 12c push the rolling rolls 2 upward.

The lifting hydraulic cylinders 12c are disposed between the auxiliary roll chocks 12a and the housing frame 7, and push the rolling rolls 2 through the auxiliary roll chocks 12a.

In addition, the lifting hydraulic cylinders 12c are fixed to the housing frame 7, and push the auxiliary roll chocks 12a upward. As a result, the rolling rolls 2 are lifted upward by the pushing force of the lifting hydraulic cylinders 12c.

In the powder-rolling device 1 of this embodiment having the above-described configuration, before the powder material Y is rolled (in a state where the rolling rolls 2 do not attach the powder material Y to the base material X using pressure), the distance between the circumferential surface of the rolling roll 2 and the circumferential surface of the preliminary press roll 8 is regulated.

Specifically, the pushing mechanisms 12 push the rolling rolls 2 so as to be separated from each other. At this time, in the pushing mechanisms 12, while the lifting hydraulic cylinders 12c lift the rolling rolls 2, the separating hydraulic cylinders 12b push the rolling rolls 2 so as to be separated from each other.

Subsequently, in a state where the pushing mechanisms 12 push the rolling rolls 2, each of the preliminary press roll lifting mechanisms 10 adj usts the position of the preliminary press roll 8, and thereby regulates the distance between the circumferential surface of the rolling roll 2 and the circumferential surface of the preliminary press roll 8.

After the distance between the circumferential surface of the rolling roll 2 and the circumferential surface of the preliminary press roll 8 was regulated, the base material X is supplied to the gap G between the rolling rolls 2 from above, and the powder material Y is supplied onto the circumferential surfaces of the rolling rolls 2 from the powder material supply device (not shown).

Subsequently, the powder material Y which has been supplied onto the circumferential surfaces of the rolling rolls 2 is pressed on the circumferential surfaces of the rolling rolls 2 by the preliminary press rolls 8, thereby receiving pressure. Thereafter, the powder material Y is attached to the surfaces of the base material X through pressure by the rolling rolls 2.

According to the powder-rolling device 1 of this embodiment described above, in a state where the rolling rolls 2 do not attach the powder material Y to the base material X through pressure (a state before the powder rolling is performed), the pushing mechanisms 12 push the rolling rolls 2 so as to be separated from each other. Therefore, the position of the rolling roll 2 before performance of the powder rolling can be adjusted to be approximately equal to the position of the rolling roll 2 during performance of the powder rolling.

Consequently, the distance between the circumferential surface of the rolling roll 2 and the circumferential surface of the preliminary press roll 8 can be regulated in view of the position of the rolling roll 2 in a state before the powder rolling is performed. As a result, the distance between the circumferential surface of the rolling roll 2 and the circumferential surface of the preliminary press roll 8 can be regulated more accurately.

In addition, the supply amount of the powder material Y is set based on the distance between the circumferential surface of the rolling roll 2 and the circumferential surface of the preliminary press roll 8. Therefore, the distance between the circumferential surface of the rolling roll 2 and the circumferential surface of the preliminary press roll 8 is regulated accurately, so that the supply amount of powder material supplied between the rolling rolls 2 can be controlled more accurately.

In the powder-rolling device 1 of this embodiment, the pushing mechanism 12 includes the separating hydraulic cylinders 12b to push the rolling rolls 2 so that the rolling rolls 2 are separated from each other, and the lifting hydraulic cylinders 12c to push the rolling rolls 2 upward.

The rolling rolls 2 are heavy members. Therefore, if only the separating hydraulic cylinders 12b push the rolling rolls 2, the required-pushing force thereof becomes excessive. In contrast, when the lifting hydraulic cylinders 12c lift the rolling rolls 2 as shown in this embodiment, it is possible to move the rolling rolls 2 to the positions before performance of the powder rolling using small-pushing force.

In addition, this embodiment adopts the structure in which the rolling rolls 2 are pushed through the auxiliary roll chocks 12a.

By adopting the above structure, compared to the structure in which the rolling rolls 2 as rotation members are pushed directly, it is possible to more stably push the rolling rolls 2.

Hereinbefore, the preferable embodiment of the present invention is described with reference to the attached drawings, but the present invention is not limited to the above embodiment. A shape, a combination or the like of each component shown in the above embodiment is illustrative only, and various modifications can be adopted based on a design request or the like within the scope not departing from the gist of the present invention.

For example, the above embodiment describes the structure in which the auxiliary roll chock 12a includes bearings.

However, the present invention is not limited thereto, and a support pad or the like in ring shape or in arc shape can be used as the auxiliary roll chock 12a.

In addition, the auxiliary roll chock 12a is provided at an optional position in the range capable of being attached to the rolling roll 2, and for example, the auxiliary roll chock 12a may be provided at the outside of the rolling roll chocks 3.

### Industrial Applicability

According to the present invention, in a powder-rolling device including a preliminary press roll, the supply amount of powder material to be supplied to the space between rolling rolls can be controlled more accurately.

### Description of Reference Signs

- 1: Powder-rolling device
- 2, 2A, 2B: Rolling roll
- 3: Rolling roll chock
- 4: Linear guide
- 7: Housing frame
- 8: Preliminary press roll
- 9: Preliminary press roll chock
- 10: Preliminary press roll lifting mechanism
- 12: Pushing mechanism (pushing unit)
- 12a: Auxiliary roll chock
- 12b: Separating hydraulic cylinder (first pushing device)
- 12c: Lifting hydraulic cylinder (second pushing device)
- G: Gap
- X: Base material
- Y: Powder material

## Claims

1. A powder-rolling device comprising:
a pair of rolling rolls used to roll a sheet-shaped base material while attaching powder material to the base material through pressure;
a preliminary press roll to form a preliminarily-pressed powder layer by pressing the powder material on a circumferential surface of the rolling rolls, before the powder material which has been supplied onto the circumferential surface of the rolling rolls is attached to the base material through pressure; and
a pushing unit to push the rolling rolls so as to be separated from each other, in a state where the rolling rolls do not attach the powder material to the base material through pressure.

2. The powder-rolling device according to Claim 1, wherein
the pushing unit includes:
a first pushing device to push the rolling rolls so that the rolling rolls are separated from each other; and
a second pushing device to push the rolling rolls upward.

3. The powder-rolling device according to Claim 2, wherein
the pushing unit includes auxiliary roll chocks provided in the rolling rolls, as devices different from rolling roll chocks which support weights of the rolling rolls, and
the first and second pushing devices push the rolling rolls through the auxiliary roll chocks.
